# NEUE EUROPÄISCHE PATENTSCHRIFT

(11) **EP 1 877 220 B2**
(45) Veröffentlichungstag und Bekanntmachung des Hinweises auf die Entscheidung über den Einspruch: **27.08.2014**
(45) Hinweis auf die Patenterteilung: 04.05.2011
(21) Anmeldenummer: 06792576.8
(22) Anmeldetag: 26.07.2006
(51) Int. Cl.: B24B 13/005, B29D 11/00, B24B 9/14

(54) **VORGEFORMTES BLOCKSTÜCK MIT DREI AUFLAGEPUNKTEN**
PREFORMED BLOCK PIECE WITH THREE POINTS OF SUPPORT
PIECE DE BLOCAGE PREFORMEE COMPRENANT TROIS POINTS D'APPUI

(30) Priorität: 10.08.2005 DE 102005038063
(43) Veröffentlichungstag der Anmeldung: 16.01.2008
(73) Patentinhaber: Schneider GmbH & Co. KG, 35112 Fronhausen (DE)
(72) Erfinder: SCHNEIDER, Gunter, 35037 Marburg (DE); BUCHENAUER, Helwig, 35232 Dautphetal-Buchenau (DE); BÖRNER, Ulf, 35041 Marburg (DE); KRÄMER, Klaus, 35232 Dautphetal-Friedensdorf (DE)
(74) Vertreter: Von Rohr Patentanwälte Partnerschaft mbB
(86) Internationale Anmeldenummer: PCT/EP2006/064689
(87) Internationale Veröffentlichungsnummer: WO 2007/017385

(56) Entgegenhaltungen:
- EP-A1- 0 758 571
- EP-A1- 1 203 626
- WO-A-99/60429
- WO-A1-01/53038
- US-A- 4 925 518

## Beschreibung

Die Erfindung bezieht sich auf ein Blockstück mit einer zu bearbeitenden optischen Linse mit den Merkmalen des Oberbegriffs von Anspruch 1.

Es ist bereits ein Verfahren zum Schneiden einer Kontaktlinse aus einem zylindrischen Rohling aus der EP 1 112 143 B1 bekannt. Dabei wird der Rohling zwecks Bearbeitung einer Basisseite auf einem ersten Blockstück aus einem zerspanbaren Kunststoffmaterial befestigt und anschließend wird die bearbeitete Basisseite an einem zweiten Blockstück angebracht, um die Vorderseite herzustellen. Die Innenseite des Rohlings ist dabei konkav ausgebildet, während das Blockstück konvex ausgebildet ist.

Bei der Herstellung von asphärischen Brillengläsern aus Kunststoff ist es allgemein üblich, diese über eine niedrig schmelzende Legierung mit dem Blockstück zu verbinden. Hierzu wird ein durch das Blockstück und die Linse begrenzter Raum mit der Legierung gefüllt, so dass die Legierung die Form der asphärischen Fläche der Linse annimmt und die Linse mit dem Blockstück verbindet. Der Einsatz der Legierung ist kostenintensiv und bezüglich des zeitlichen Verfahrensablaufs nachteilig, da relativ viel Legierung benötigt wird. Die Legierung muss warm eingeformt, abgekühlt und zwecks Abblocken wieder aufgeschmolzen werden. Während des Abkühlvorgangs muss die relative Position zwischen dem Blockstück und der Linse fixiert werden. Die zu verbindende Seite der Linse ist dabei sphärisch, damit die Dichtigkeit bei der Anlage an das Blockstück zwecks Befüllung mit flüssigem Alloy gewährleistet ist. Bei asphärischen Flächen ist eine Dichtungslippe zwischen dem Blockstück und der Linse vorgesehen, die eine dichtende Anlage gewährleistet.

Alternativ beschreibt die JP 11198014 A, die Linse über ein verformbares Wachs aufzunehmen bzw. dieses gegen die Linse anzuformen und somit die Linse zu fixieren.

Dokument US 5,210,695 beschreibt ein Blockstück gemäß dem Oberbegriff von Anspruch 1.

Der Erfindung liegt die Aufgabe zugrunde, ein Blockstück und ein Verfahren zum Auf- und Abblocken derart auszubilden, dass ein optimales Auf- und Abblocken der Linse gewährleistet sind.

Gelöst wird die Aufgabe erfindungsgemäß durch die Merkmale von Anspruch 1. Hierdurch wird erreicht, dass die erste Seite der Linse gegen die Aufnahmefläche zur Anlage bringbar ist und somit die Menge des zu verwendenden Haftmittels auf ein Minimum reduziert wird. Die Art des Anlageverhältnisses zwischen der Aufnahmefläche und der ersten Seite bzw. Linsenfläche hängt von der Rauhigkeit der Flächen, von der Viskosität des verwendeten Haftmittels und von der verwendeten Anlage- bzw. Anpresskraft ab. Idealerweise befindet : sich zwischen beiden Flächen so wenig Haftmittel wie möglich. Das Haftmittel stellt dabei kein Distanzmittel dar, sondern dient lediglich der Füllung bzw. Abdichtung der vorhandenen Spalte bzw. Rauhigkeiten zwischen beiden Flächen. Da in Verbindung mit der Aktivierung von Haftmittel bzw. mit der Einbringung von Haftmittel in der Regel ein Wärmeeintrag notwendig ist, ist im erfindungsgemäßen Fall ein entsprechend reduzierter Wärmeeintrag für die Aktivierung bzw. Einbringung der so gebildeten äußerst dünnen Klebeschicht notwendig.

Ferner kann neben der asphärisch ausgebildeten ersten Seite der Linse nunmehr die zu bearbeitende zweite Seite der Linse ebenfalls asphärisch, also torisch oder progressiv ausgebildet werden, so dass die die optischen Eigenschaften der Linse begründenden Formen bzw. Merkmale, also Radien, optische Achsen, optische Teilflächen oder Prismen der Linse optimal auf beide Seiten der Linse verteilt werden können.

Darüber hinaus kann die Linse ganzflächig gegen die Aufnahmefläche anliegen und so ganzflächig durch diese gestützt werden, wobei aufgrund der Zerspanbarkeit des Blockstücks jegliche Formgestaltung der Linse mit Rücksicht auf den Durchmesser bzw. die Breite derselben möglich ist.

Zwecks Aufnahme spezieller sphärischer Linsen weist das Halteteil eine konvexe oder konkave sphärische Aufnahmefläche mit einer Hauptachse auf, die die Ausrichtung der so gebildeten Kugelteilfläche beschreibt.

Erfindungsgemäß ist entsprechend der Ausrichtung der aufzunehmenden Linse die Aufnahmefläche als Negativfläche zur Linse ausgebildet, wobei die Hauptachse der Negativfläche bzw. Aufnahmefläche versetzt und/oder gekippt zur Rotationsachse des Kupplungsteils angeordnet ist. Die sphärische Fläche des Blockstücks ist somit individuell der Ausrichtung der aufzunehmenden Linse nach gestaltet, so dass der sich anschließende Bearbeitungsprozess optimal ausgeführt werden kann.

Eine zusätzliche Möglichkeit ist gemäß einer Weiterbildung, dass mindestens ein Druckmittelkanal zwischen der Aufnahmefläche und einer Außenfläche vorgesehen ist, über den Druckmittel von außen in den Bereich zwischen der Aufnahmefläche und der aufnehmbaren Linse bringbar ist. Zum Abblocken bzw. Lösen der Linse vom Blockstück ist das Einbringen von Druckmitteln wie Luft, Wasser oder Flüssigkeiten mit anderen Viskositäten zwischen die Aufnahmefläche und die jeweilige Linse vorteilhaft, da dieser Abblockvorgang sehr zügig und ohne die Einbringung zusätzlicher Wärme erfolgen kann. Der Druckmittelkanal entspringt dabei an einer Außenfläche des Blockstücks, so dass ein entsprechender Druckmittelanschluss bzw. eine entsprechende Druckmittelleitung anschließbar ist.

Vorteilhaft ist es hierzu auch, dass in der Aufnahmefläche mindestens ein Ausgleichskanal zur Aufnahme von überschüssigem Haftmittel vorgesehen ist. Der Ausgleichskanal kann dabei als Nut, Bohrung oder Ausnehmung ausgebildet sein, so dass beim Anlegen einer Linse der überschüssige, zwischen der Linse und der Aufnahmefläche befindliche Kleber in den bzw. die zur Verfügung stehenden Ausgleichskanäle gepresst wird. Damit kann der zwischen der Linse und der Aufnahmefläche befindliche Teil des Haftmittels auf vorgenanntes Minimum reduziert werden.

Ferner ist es vorteilhaft, dass der Ausgleichskanal und/oder der Druckmittelkanal stern-, spiral- und/oder kreisförmig ausgebildet ist. Dabei sind Anzahl und Größe der jeweiligen Kanäle derart zu wählen, dass die Linse auch ganzflächig und ausreichend durch das Blockstück gestützt wird, so dass das Blockstück die erforderliche Steifigkeit nicht verliert. Der Ausgleichskanal kann dabei kreisförmig am Außenrand der Aufnahmefläche vorgesehen sein, damit das seitlich beim Aufblocken austretende überschüssige Haftmittel aufgefangen wird und nicht auf das Werkstückfutter läuft.

Vorteilhaft ist es auch, dass der Druckmittelkanal mit Bezug zur Fließrichtung des Druckmittels einen sich aufweitenden Querschnitt aufweist. Beim Aufsetzen der Linse auf das Blockstück wird sich das aufgebrachte Haftmittel zwangsläufig in die bestehenden Druckmittelkanäle eindrücken, so dass dieses beim Lösen der Linse wieder herausgedrückt werden muss. Durch die vorgenannte Querschnittsausbildung ist das Ausdrücken des zumindest teilweise erhärteten Haftmittels ohne weiteres möglich, da keine Hinterschneidung besteht.

Dabei ist es vorteilhafterweise vorgesehen, dass mehrere Druckmittelkanäle gleichmäßig verteilt an der Aufnahmefläche münden und dass der Druckmittelkanal einen trichterförmigen Mündungsbereich aufweist. Die verschiedenen Druckmittelkanäle können dabei anstatt vorgenannter Ausgleichskanäle vorgesehen sein, da diese zwangsläufig überschüssiges Haftmittel aufnehmen. Die Verteilung der Druckmittelkanäle gewährleistet eine optimale Lösung bzw. ein optimales Abblocken der Linse, so dass diese beim Ablöseprozess nicht beschädigt wird.

Im Zusammenhang mit der erfindungsgemäßen Ausbildung und Anordnung ist es von Vorteil, dass der Druckmittelkanal zentrisch, im Bereich einer Mittelachse der Aufnahmefläche und/oder im Bereich der punktförmigen Abstützstellen mündet. Das Blockstück dient zur Herstellung verschiedenster Linsenformen, wobei auch sehr kleine Linsen zu berücksichtigen sind. Mit der Anordnung des Druckmittelkanals nahe des Zentrums der Aufnahmefläche steht dieser unabhängig von der herzustellenden Größe der Linse und der damit einhergehenden spanenden Bearbeitung der Linse einerseits sowie des Blockstücks andererseits auf jeden Fall zur Verfügung. Bei einer Anordnung des Druckmittelkanals bzw. seiner Mündung im Bereich der Abstützstellen ist das Abblocken relativ einfach zu gestalten, da das Trennen der Linse von der jeweiligen relativ kleinen Abstützstelle ohne zusätzlichen Aufwand erfolgt.

Vorteilhaft ist es ferner, dass das Blockstück als Kunststoff-Spritzgussteil ausgebildet ist. Somit ist eine günstige und sehr schnelle Herstellung des Blockstücks gewährleistet.

Dabei ist es von Vorteil, dass das Blockstück mindestens zweiteilig ausgebildet ist. Somit muss nach Fertigstellung der Linse lediglich das zerspante Halteteil entsorgt werden, wobei das Kupplungsteil weiter verwendet wird.

Die Aufnahmefläche des Blockstücks und die erste Seite der Linse werden bezüglich ihrer jeweiligen Lage bzw. Ausrichtung der optischen Achsen zueinander ausgerichtet, die erste Seite und die Aufnahmefläche werden verbunden und somit ein Blockstück-Linsenpaar gebildet. Hierdurch wird erreicht, dass die erste Seite der Linse gegen die Aufnahmefläche zur Anlage bringbar ist und somit die Menge des zu verwendenden Haftmittels auf ein Minimum reduziert wird. Da in Verbindung mit der Einbringung von Kleber in der Regel ein Wärmeeintrag notwendig ist, ist im erfindungsgemäßen Fall ein entsprechend reduzierter Wärmeeintrag für die Einbringung der so gebildeten äußerst dünnen Klebeschicht notwendig.

Schließlich ist es von Vorteil, dass die Verfahrensschritte Formen und Haftmittelauftrag und/oder die Verfahrensschritte Haftmittelauftrag und Ausrichten in umgekehrter Reihenfolge ausgeführt oder abgearbeitet werden. Soweit das Haftmittel auf die Linse aufgebracht wird, kann der Verfahrensschritt Haftmittelauftrag auch vor dem Verfahrensschritt Formen erfolgen, so dass nach dem Aufbringen des Haftmittels auf die Linse erst die spanende Bearbeitung des Blockstücks erfolgt. Darüber hinaus ist es auch möglich, das Haftmittel erst nach dem Ausrichten von Blockstück und Linse aufzubringen, insbesondere dann, wenn zwischen dem Aufbringen des Haftmittels und dem Zeitpunkt des Anlegens der Linse an die Aufnahmefläche wegen der Aushärtezeit des Haftmittels so wenig Zeit wie möglich vergehen sollte.

Vorteilhaft ist es hierzu auch, dass das Haftmittel spiral-, stern- und/oder punktförmig auf den Abstützstellen aufgebracht wird. Beim spiralförmigen Aufbringen des Haftmittels sollte der zentrisch vorgesehene Druckmittelkanal bzw. die weiteren Druckmittelkanäle freigehalten werden, so dass sich zum Abblocken das Druckmittel in den durch die Linse und die Aufnahmefläche einerseits sowie benachbarte Haftmittelraupen andererseits gebildeten Freiraum ausbreiten kann. Der sich fortpflanzende, durch das strömende Druckmittel aufgebaute dynamische Druck sorgt somit für eine umfangreiche Lösekraft, die das Abblocken der Linse bzw. das Lösen der Linse später gewährleistet.

Letztlich ist es von Vorteil, dass das Haftmittel unter Einsatz von Wärmestrahlung und/oder UV-Strahlung ausgehärtet wird. Je nach Einsatz von Haftmittel ist diese Aushärtung durch UV-Strahlung oder sonstigen Energieeintrag wie Erwärmen oder dergleichen möglich.

Vorteilhaft ist es außerdem, dass vor oder nach dem Bearbeiten der Aufnahmefläche mindestens ein Ausgleichskanal für überschüssiges Haftmittel in die Aufnahmefläche eingearbeitet wird und/oder dass vor oder nach dem Bearbeiten der Aufnahmefläche mindestens eine als Druckmittelkanal ausgebildete, die Kommunikation zwischen der Aufnahmefläche und der Umgebung gewährleistende Ausnehmung in das Blockstück eingearbeitet wird. Je nach gewünschter Linsenform kann ein individuelles Ausbilden der Ausgleichs- bzw. Druckmittelkanäle erforderlich und erfindungsgemäß vorteilhaft sein. Dabei ist auch die Verbindung verschiedener Kanäle, die an verschiedenen Punkten der Aufnahmefläche münden, möglich.

Schließlich ist es von Vorteil, dass die Aushärtung des Haftmittels der Dauer und/oder der Intensität nach derart erfolgt, dass das Haftmittel im Wesentlichen nur im Bereich zwischen der Linse und der Aufnahmefläche vollständig aushärtet und im Bereich des Ausgleichskanals und/oder des Druckmittelkanals nicht aushärtet. Somit wird beim Abblocken bzw. Lösen der Linse das einströmende Druckmittel nicht am Eintritt zwischen Linse und Aufnahmefläche gehindert, so dass mit Rücksicht auf die vermiedenen Klebekräfte innerhalb der Kanäle ein einfacheres und kontrollierteres Ablösen der Linse gewährleistet ist.

Vorteilhaft ist es hierzu auch, dass nach dem Verbinden der Linse mit dem Blockstück das spanende Bearbeiten und/oder das Polieren der zweiten Seite der Linse erfolgt. Die erfindungsgemäße aufgeblockte Linse kann nun in jeglicher Weise bearbeitet werden, wobei das jeweilige Blockstück-Linsenpaar nach der Herstellung für alle weiteren Verfahrensschritte bis zur Fertigstellung der Linse als Einheit verbleibt.

Ferner ist es vorteilhaft, dass zum Polieren der Linse das Blockstück-Linsenpaar in ein weiteres Werkstückfutter eingespannt wird. Das erfindungsgemäße Blockstück bzw. das erfindungsgemäß gebildete Blockstück-Linsenpaar kann dabei in alle zur Bearbeitung notwendigen Aufnahmen der Folgestationen, also Werkstückfutter bzw. Blockstückhalter, eingesetzt werden.

Vorteilhaft ist es außerdem, dass nach dem Bearbeiten und/oder Polieren der Linse das Beschichten der aufgeblockten Linse erfolgt und dass zum Beschichten der Linse mindestens ein Blockstück-Linsenpaar in einem weiteren Blockstückhalter aufgenommen wird. In der Regel werden mehrere Linsen gleichzeitig beschichtet, wobei diese bzw. die Blockstück-Linsenpaare nebeneinander im Bereich einer Verdampfungs- bzw. Beschichtungsquelle angeordnet werden. Dabei ist es sehr wichtig, dass nur die zu bearbeitende erste Seite bzw. der Randbereich der Linse beschichtet werden. Da die nicht zu bearbeitende zweite Seite erfindungsgemäß ganzflächig durch das Blockstück abgedeckt ist, bleibt diese unweigerlich frei von ungewünschtem Beschichtungsmittel. Das erfindungsgemäße Blockstück verbleibt als Teil des Blockstück-Linsenpaares bei der Linse und kann durch den Blockstückhalter zwecks Beschichtung aufgenommen werden. Schließlich ist es von Vorteil, dass nach dem Beschichten der Linse der Randbereich R des Blockstück-Linsenpaares spanend bearbeitet oder geschliffen wird. Nach dem Beschichten der Linse ist es wünschenswert, dass der Randbereich der nunmehr beschichteten Linse, auf dem aufgrund von Konturläufen und Oberflächenspannungen Beschichtungsfehler auftreten können, abgearbeitet wird. Erfindungsgemäß ist dieser Bearbeitungsschritt der Anpassung der Linsengröße sowie der Bearbeitung des Randbereichs zwecks Aufnahme in einer Brillenfassung nach dem Beschichten vorgesehen. Durch das spanbare bzw. schleifbare Blockstück, welches erfindungsgemäß an der Linse verbleibt, kann diese ohne weiteren Umblockaufwand unabhängig von ihrer Größe und der Form des Randbereichs fertiggestellt werden. Das erfindungsgemäße Blockstück gewährleistet auch eine freie Bearbeitung der Linse ohne Behinderung durch sonst übliche weitere Spann- bzw. Klemmmittel. Auch Bohrungen etc. können ohne weiteres vorgenommen werden.

Ferner ist es vorteilhaft, dass zum Abblocken der Linse Druckmittel über den Druckmittelkanal zwischen die erste Seite der Linse und die Aufnahmefläche des Blockstücks bzw. zumindest die punktförmigen Abstützstellen der Aufnahmefläche eingebracht wird. Je nach Ausbildung des Klebers mit Rücksicht auf die Form beim Auftragen des Klebers bzw. Haftmittels setzt sich das Druckmittel in dem vorstehend beschriebenen, nicht gedichteten Freiraum bzw. Spalt zwischen Linse, Aufnahmefläche und Haftmittelraupen fort, so dass das Ablösen der Linse nach und nach bewirkt wird. Aber auch bei ganzflächig aufgetragenem Haftmittel, wenn also keine Undichtigkeiten zwischen der Aufnahmefläche und der Linse vorhanden sind, wie bei der Klebefolie oder anderen Klebevarianten wie das Anschmelzen der Aufnahmefläche ist die stetige Fortsetzung des Druckmittels ausgehend von der Mündung des Druckmittelkanals bzw. der verschiedenen Mündungen gewährleistet.

Vorteilhaft ist es außerdem, dass zum Abblocken und/oder Lösen der Linse das Haftmittel und/oder die Linse erwärmt oder abgekühlt werden. Dadurch, dass erfindungsgemäß sehr wenig Haftmittel bzw. Kleber verwendet werden kann, ist der Ablösevorgang durch Erwärmung bzw. Abkühlung des Haftmittels sehr schnell möglich, da nur wenig Haftmittel vorhanden ist. Beim Abkühlen wird das Haftmittel spröde.

Es ist vorteilhaft, dass zum Abblocken und/oder Lösen der Linse das verbleibende Halteteil und/oder das Kupplungsteil des Blockstücks derart verformt wird, dass sich die Aufnahmefläche verformt und sich von der Linse zumindest teilweise löst. Das verbleibende Halteteil und/oder das Kupplungsteil wird hierzu in einer in radialer Richtung wirkenden Spannzange aufgenommen, die eine entsprechende Klemmkraft generiert, so dass das verbleibende Halteteil und/oder das Kupplungsteil gestaucht wird. Als Folge dieser Stauchung wölbt sich das verbleibende Halteteil aus und die Linse löst sich von der Aufnahmefläche bzw. vom Kleber. Dass die Klebeschicht erfindungsgemäß sehr dünn ist, begünstigt auch das Abblockverfahren.

Als Alternative ist es von Vorteil, dass vor dem Verformen das Halteteil und/oder das Kupplungsteil des Blockstücks mit mindestens einem Schlitz versehen bzw. geschlitzt und erst anschließend verformt werden. Dazu muss das Blockstück-Linsenpaar aus dem Werkstückfutter entnommen und ggf. linsenseitig gehalten werden, so dass das Kupplungsteil mittels einer Säge oder eines Fräsers geschlitzt werden kann.

Hierbei ist es von vorteil, dass das Halteteil und/oder das Kupplungsteil zwecks Verformung in eine Richtung quer zum Schlitz mit einer Klemmkraft beaufschlagt werden. Der Schlitz ist dabei so tief, dass sich beim anschließenden Verformungsprozess durch Klemmen bzw. Zusammendrücken zumindest des Kupplungsteils der Schlitz zumindest teilweise schließt und sich dabei auch das Halteteil verformt, so dass sich dieses zumindest von einem Teil der Linse löst. Der Schlitz reicht dabei vorzugsweise bis unmittelbar vor das Glas, also auch bis in das Halteteil, so dass eine Restwandstärke des Blockstücks von etwa 1 mm bis 2 mm verbleibt. Beim Klemmen wird der Löseprozess am Rand initiiert und setzt sich dann aufgrund der anhaltenden Verformung zur Mitte hin fort.

Weitere Vorteile und Einzelheiten der Erfindung sind in den Patentansprüchen und in der Beschreibung erläutert und in den Figuren dargestellt.

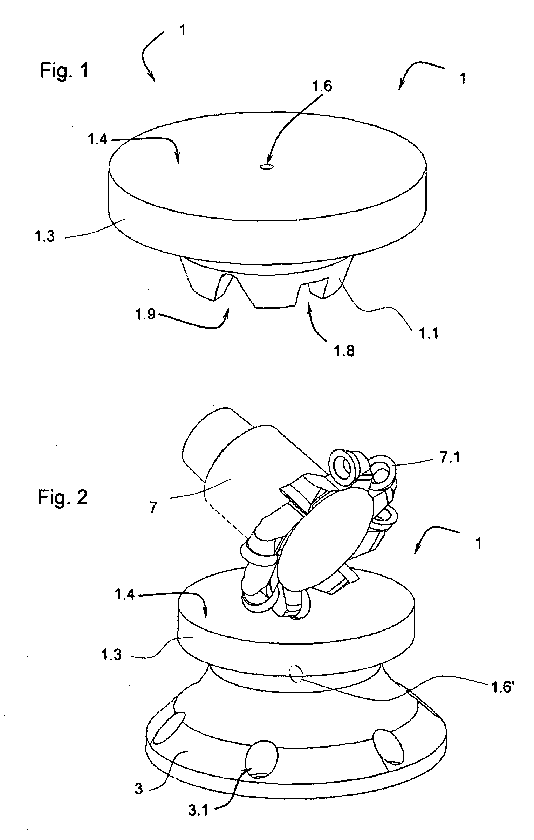

Dabei zeigen die Figuren 1 bis 12 eine perspektivische Darstellung des Blockstücks und der Linse bei den verschiedenen Bearbeitungsprozessen.

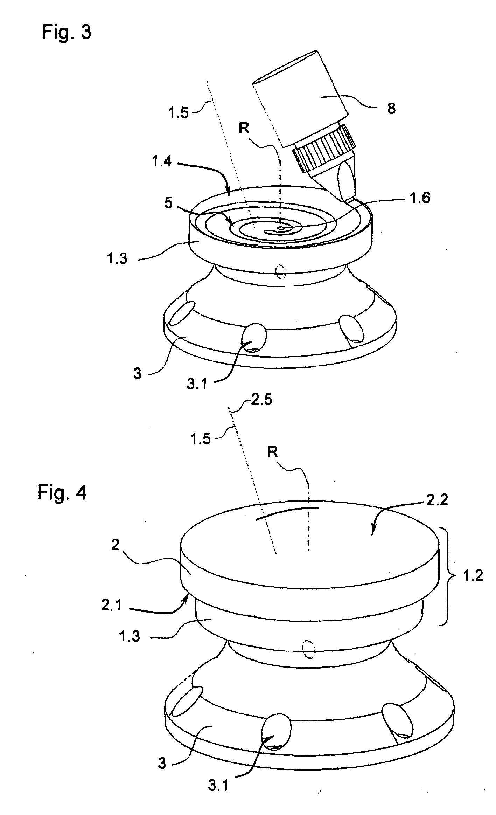

Ein in Figur 1 dargestelltes Blockstück 1 weist ein Kupplungsteil 1.1 zur Aufnahme und Ausrichtung in einem Werkstückfutter 3 bzw. Blockstückfutter gemäß Figur 2 sowie ein Halteteil 1.3 mit einer Aufnahmefläche 1.4 für eine als Brillenglas ausgebildete Linse 2 gemäß Figur 4 auf. Das Halteteil 1.3 weist dabei einen derart großen Durchmesser auf, dass jedes herzustellende Brillenglas mit einer zweiten Seite 2.2 ganzflächig zur Anlage gegen die Aufnahmefläche 1.4 bringbar ist. Im Zentrum der Aufnahmefläche 1.4 weist das Blockstück 1 die Mündung eines Druckmittelkanals 1.6 auf, über den Druckmittel von einer Außenfläche 1.7 in den Bereich der Aufnahmefläche 1.4 geführt werden kann. Das Werkstückfutter 3 gemäß Figur 2 weist mehrere über den Umfang verteilt angeordnete Ausnehmungen 3.1 für Halteschrauben zwecks Anbindung eines nicht dargestellten Flansches einer Werkstückspindel auf.

Das Kupplungsteil 1.1 weist neben einer konischen bzw. zylindrischen Haltefläche eines bestimmten Durchmessers eine stirnseitig angeordnete, in axiale Richtung wirkende Anlagefläche auf und besitzt zwei formschlüssig im Werkstückfutter 3 lagerbare Nuten, eine Mitnehmernut 1.9 zum rotatorischen Antrieb des Blockstücks 1 und eine Orientierungsnut 1.8, die zur Ausrichtung des Blockstücks 1 relativ zum Werkstückfutter 3 dient.

Gemäß Figur 2 wird das Blockstück 1 bzw. die Aufnahmefläche 1.4 des Blockstücks 1 mittels eines Fräskopfes 7 mit mehreren Schneiden 7.1 spanend bearbeitet. Die Aufnahmefläche 1.4 erfährt dabei die Negativform entsprechend der zweiten Seite 2.2 des zu befestigenden Brillenglases 2. In Figur 2 ist zudem eine Anschlussöffnung 1.6' des Druckmittelkanals 1.6 dargestellt, die sich an der Außenseite des Blockstücks 1 befindet.

Die in Figur 3 dargestellte Aufnahmefläche 1.4 stellt nun die Negativform zu einer ersten Seite 2.1 des Brillenglases 2 gemäß Figur 4 dar. Über eine Spritzdüse bzw. Haftmitteldüse 8 wird Haftmittel bzw. Kleber 5 in Form einer Raupe schneckenförmig auf die Aufnahmefläche 1.4 aufgetragen. Die Mündung des zentrisch angeordneten Druckmittelkanals 1.6 bleibt dabei frei von Haftmittel. Die so hergestellte Aufnahmefläche 1.4 weist als Negativfläche ebenso eine fiktive optische Achse 1.5 auf, wie sie auch die aufzulegende erste Seite 2.1 der Linse 2 gemäß Figur 4 hat.

Gemäß Figur 4 ist das Brillenglas 2 mit seiner ersten Seite 2.1 gegen die Aufnahmefläche 1.4 des Halteteils 1.3 aufgelegt bzw. aufgeklebt. Der hier dargestellte Rohling des Brillenglases 2 ist dabei betreffend seinen Durchmesser größer als das Halteteil 1.3. Das ist jedoch nicht nachteilig, da das herzustellende Brillenglas 2 deutlich kleiner wird als der Rohling, so dass dieses letztlich wie vorstehend beschrieben ganzflächig auf dem Halteteil 1.3 aufliegt. Der Rohling bzw. die Linse 2 bilden zusammen mit dem Blockstück 1 ein sogenanntes Blockstück-Linsenpaar 1.2, welches in den folgenden Bearbeitungsschritten ständig als Einheit verbleibt.

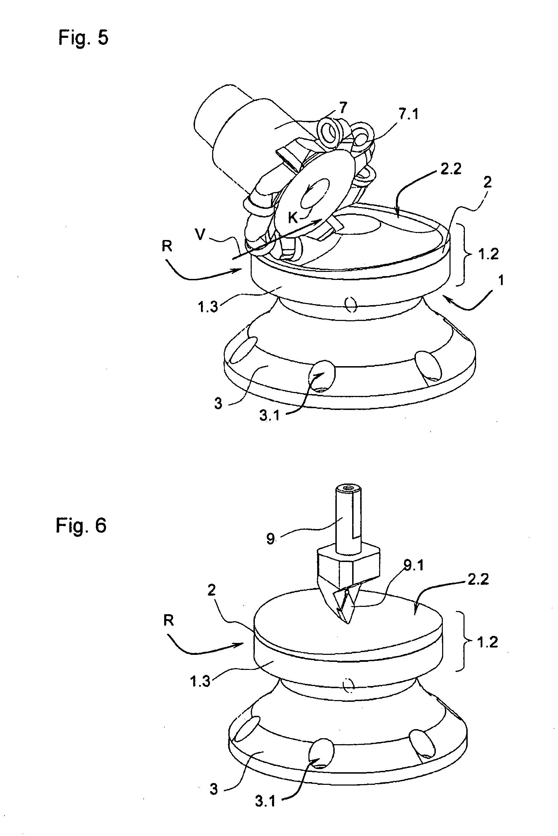

Gemäß Figur 5 wird die zweite Seite 2.2 der Linse 2 mittels des Fräskopfes 7 mit mehreren Schneiden 7.1 spanend bearbeitet. Die Bearbeitung erfolgt dabei gemäß Drehrichtung K des Fräskopfes 7 sowie bezüglich einer Vorschubrichtung V von außen nach innen. Mit Rücksicht auf die überlagerten Drehbewegungen von Fräskopf 7 und Linse 2 bzw. Werkstückspindel ergibt sich somit eine bessere Spanbildung und es herrscht eine bessere Abstützung der Linse 2 vor, da die Schneidkräfte zur Seite und nach oben wirken. Der Spanabriss erfolgt somit nach oben auf der noch nicht fertig bearbeiteten Fläche. Solche Oberflächenfehler werden in der folgenden Bearbeitung wieder abgearbeitet. Bei der fräsenden Bearbeitung gemäß Figur 5 wird neben der zweiten Seite 2.2 der Linse 2 auch ein Randbereich R der Linse 2 sowie des Halteteils 1.3 bearbeitet.

Gemäß Figur 6 wird vornehmlich die zweite Seite 2.2 der Linse 2 nach der fräsenden Bearbeitung nunmehr zwecks Feinbearbeitung mit einem Drehmeißel 9 bzw. einer Schneidplatte 9.1 des Drehmeißels 9 bearbeitet.

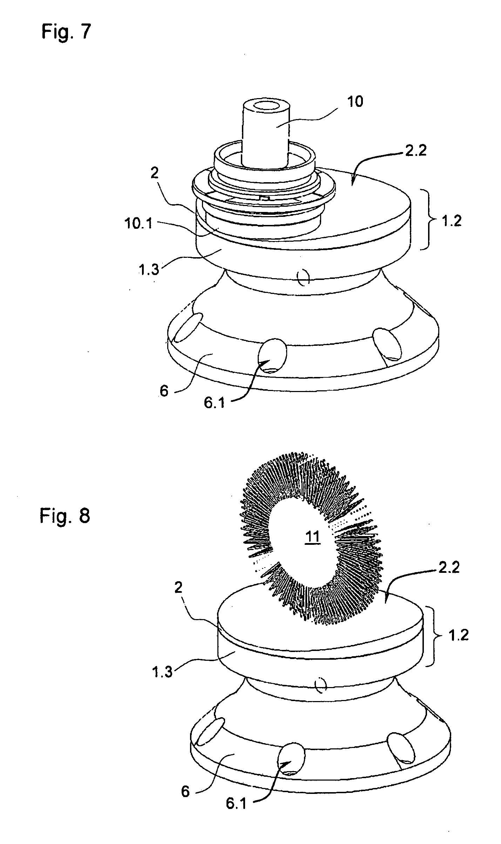

Gemäß Figur 7 wird die zweite Seite 2.2 der Linse 2 über einen Polierkopf 10 mit einer Polierauflage 10.1 mit vollflächiger Unterstützung durch das Halteteil 1.3 ganzflächig poliert.

Danach wird die Linse 2 bzw. die zweite Seite 2.2 gemäß Figur 8 mittels einer Reinigungsbürste 11 gereinigt, wobei ergänzend oder alternativ auch eine Ultraschallreinigung möglich ist. In allen bisherigen Verfahrensschritten ist das Blockstück-Linsenpaar 1.2 als Einheit verblieben. Sowohl beim Polieren als auch beim Reinigen ist das Blockstück 1 bzw. das Kupplungsteil 1.1 des Blockstücks 1 in einem weiteren Werkstückfutter 6 mit Ausnehmungen 6.1 für Halteschrauben aufgenommen. Das Werkstückfutter 6 kann auch auf andere Weise befestigt werden.

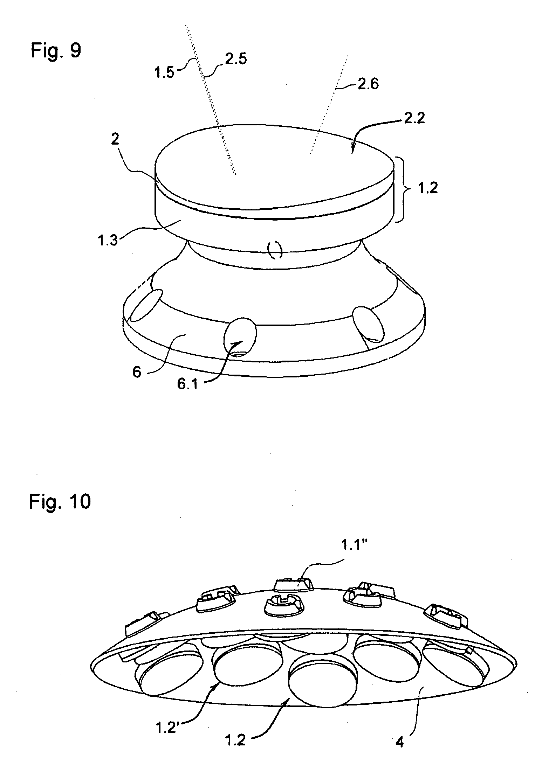

Gemäß Figur 9 ist die erste Seite 2.1 der Linse 2 nunmehr fertiggestellt. Sie weist eine von einer optischen Achse 2.5 der zweiten Seite 2.2 abweichende zweite optische Achse 2.6 auf. Die die optischen Eigenschaften des Brillenglases gewährleistenden Merkmale der Linse 2 sind somit entsprechend den optischen Achsen 2.5, 2.6 auf die erste Seite 2.1 und die zweite Seite 2.2 der Linse 2 aufgeteilt.

Zwecks Beschichtung der zweiten Seite 2.2 der Linse 2 wird diese zusammen mit dem Blockstück, also den jeweiligen Blockstück-Linsenpaaren 1.2, 1.2', in einen glockenförmigen Blockstückhalter 4 gemäß Figur 10 eingebracht bzw. durch diesen aufgenommen. Die Blockstücke 1 sind soweit normiert, dass sie gemäß den vorangehenden Bearbeitungsprozessen in die verschiedenen Werkstückfutter 3, 6 bzw. Blockstückhalter passen. Die erste Seite 2.1 der Linse 2 ist dabei ganzflächig gegen die Aufnahmefläche 1.4 des Halteteils 1.3 angelegt bzw. geschützt, so dass bei diesem Beschichtungsvorgang lediglich die zweite Seite 2.2 der Linse 2 bzw. der Randbereich R beschichtet werden.

Da bei der Beschichtung insbesondere im Randbereich der Linse 2 Fehler auftreten können, erfolgt zwecks Herstellung der endgültigen Form die Bearbeitung des Randbereichs R erst nach dem Beschichten.

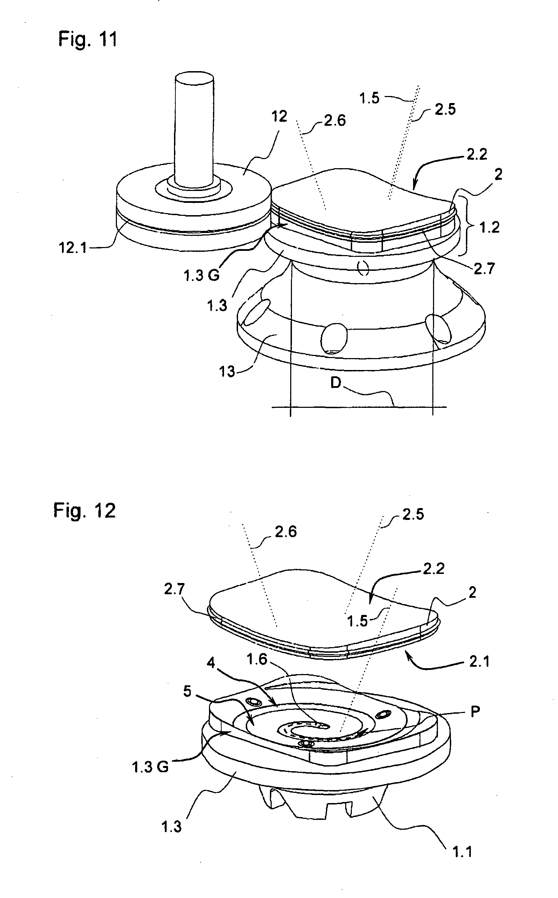

Gemäß Figur 11 wird mittels einer Schleifscheibe 12 bzw. eines Fräsers der Randbereich R bzw. der Umfang des Brillenglases 2 auf das gewünschte Maß heruntergeschliffen, wobei dieses Maß unabhängig von einem Durchmesser D des Kupplungsteils 1.1 des Blockstücks 1 ist. Es werden lediglich der Randbereich R des Brillenglases 2 sowie ein Teilrandbereich eines Halteteils 1.3G bearbeitet bzw. geschliffen. Die Schleifscheibe 12 weist zudem eine Umfangsnut 12.1 auf, so dass beim Schleifvorgang ein entsprechender Rand 2.7 am Brillenglas 2 zwecks Befestigung in einer Fassung verbleibt. Das Kupplungsteil 1.1 des Blockstücks 1 ist in einem weiteren Werkstückfutter 13 mit Ausnehmungen 13.1 für Halteschrauben aufgenommen.

Gemäß Figur 12 wurde das Brillenglas 2 vom Halteteil 1.3 abgeblockt. Hierzu wurde nicht dargestelltes Druckmittel über den Druckmittelkanal 1.6 zwischen die Aufnahmefläche 1.4 und die erste Seite 2.1 der Linse 2 eingebracht. Mit Rücksicht auf die auf der Aufnahmefläche 1.4 befindliche Haftmittelraupe 5 hat sich das eingebrachte Druckmittel in den zwischen Aufnahmefläche 1.4 und erster Seite 2.1 einerseits sowie die benachbarten Raupen 5 andererseits gebildeten Freiraum (siehe Strömungsrichtung P) ausgebreitet und so den Ablöseprozess des Brillenglases 2 initiiert.

### Bezugszeichenliste

- 1: Blockstück
- 1.1: Kupplungsteil
- 1.2: Blockstück-Linsenpaar
- 1.2': Blockstück-Linsenpaar
- 1.3: Halteteil
- 1.3G: Halteteil, geschliffen
- 1.4: Aufnahmefläche
- 1.5: optische Achse, fiktiv
- 1.6: Druckmittelkanal, Ausnehmung
- 1.6': Anschlussöffnung
- 1.7: Außenfläche
- 1.8: Orientierungsnut
- 1.9: Mitnehmernut
- 2: optische Linse, Brillenglas
- 2.1: erste Seite
- 2.2: zweite Seite
- 2.5: optische Achse
- 2.6: zweite optische Achse
- 2.7: Rand
- 3: Werkstückfutter
- 3.1: Ausnehmung für Halteschraube
- 4: Blockstückhalter
- 5: Haftmittel, Kleber, Raupe, Haftmittelraupe
- 6: weiteres Werkstückfutter
- 6.1: Ausnehmung für Halteschraube
- 7: Fräskopf
- 7.1: Schneide
- 8: Haftmitteldüse, Spritzdüse
- 9: Drehmeißel
- 9.1: Schneide, Schneidplatte
- 10: Polierkopf
- 10.1: Polierauflage
- 11: Reinigungsbürste
- 12: Werkzeug, Schleifscheibe
- 12.1: Umfangsnut
- 13: weiteres Werkstückfutter
- 13.1: Ausnehmung für Halteschraube

- D: Durchmesser
- K: Drehrichtung
- P: Druckmittel, Strömungsrichtung
- R: Randbereich
- V: Vorschubrichtung

## Patentansprüche

1. Blockstück mit einer zu bearbeitenden, als Brillenglas (2) ausgebildeten Linse,
mit einem eine Rotationsachse aufweisenden Kupplungsteil (1.1) zur Aufnahme in einem Werkstückfutter (3),
mit einem Halteteil (1.3) für die Befestigung des Brillenglases (2), wobei das Halteteil (1.3) eine Aufnahmefläche (1.4) zum Befestigen einer ersten Seite (2.1) des Brillenglases (2) aufweist und wobei die Aufnahmefläche (1.4) der aufzunehmenden ersten Seite (2.1) des Brillenglases (2) nach konvex oder konkav und entsprechend der Form der ersten Seite (2.1) des aufzunehmenden Brillenglases (2) als sphärische Negativfläche ausgebildet ist, und
mit einem Kleber als zusätzlichem Haftmittel zwischen der Aufnahmefläche (1.4) des Halteteils (1.3) und der ersten Seite (2.1.) des Brillenglases (2),
wobei das Blockstück (1) aus einem zerspanbaren Kunststoff gefertigt ist,
**dadurch gekennzeichnet,**
**dass** die Hauptachse der Aufnahmefläche (1.4) des Blockstückes (1) versetzt und/oder gekippt zur Rotationsachse des Kupplungsteils (1.1) angeordnet ist,
**dass** die erste Seite (2.1) des Brillenglases (2) an der Aufnahmefläche (1.4) des Halteteils (1.3) anliegt und
**dass** das Haftmittel nicht als Distanzmittel dient, sondern lediglich die vorhandenen Spalte bzw. Rauhigkeiten zwischen der Aufnahmefläche (1.4) und der ersten Seite (2.1) füllt.

2. Blockstück nach Anspruch 1, **dadurch gekennzeichnet,**
**dass** mindestens ein Druckmittelkanal (1.6) zwischen der Aufnahmefläche (1.4) und einer Außenfläche (1.7) vorgesehen ist, über den Druckmittel von außen in den Bereich zwischen der Aufnahmefläche (1.4) und der aufnehmbaren Linse (2) bringbar ist.

3. Blockstück nach Anspruch 2, **dadurch gekennzeichnet,**
**dass** mehrere Druckmittelkanäle (1.6) gleichmäßig verteilt an der Aufnahmefläche (1.4) münden.

4. Blockstück nach einem der vorhergehenden Ansprüche, **dadurch gekennzeichnet,**
**dass** das Blockstück (1) als Kunststoff-Spritzgussteil ausgebildet ist.

5. Blockstück nach einem der vorhergehenden Ansprüche, **dadurch gekennzeichnet,**
**dass** das Blockstück (1) mindestens zweiteilig ausgebildet ist.

## Claims

1. Block piece (1) with a lens that is to be machined and designed as a spectacle lens (2), with a coupling part (1.1) having a rotation axis for the reception in a work piece chuck (3),
with a holding device (1.3) for the affixing of the spectacle lens (2), wherein the holding device (1.3) comprises a receiving surface (1.4) for affixing a first side (2.1) of the spectacle lens (2), and wherein the receiving surface (1.4) is formed convexly or concavely according to the first side (2.1) of the spectacle lens (2) that is to be received and as a spherical negative surface according to the shape of the first side (2.1) of the spectacle lens (2) that is to be received, and
with glue as an additional adhesive between the receiving surface (1.4) of the holding device (1.3) and the first side (2.1) of the spectacle lens (2),
wherein the block piece (1) is manufactured from a machinable plastic, **characterized in**
**that** the main axis of the receiving surface (1.4) of the block piece (1) is arranged staggered and/or tilted to the rotation axis of the coupling part (1.1),
**that** the first side (2.1) of the spectacle lens (2) abuts on the receiving surface (1.4) of the holding device (1.3), and
**that** the adhesive does not serve as a distance means, but fills in merely the existing gaps and roughness between the receiving surface (1.4) and the first side (2.1).

2. Block piece according to claim 1, **characterized in**
**that** at least one pressure medium channel (1.6) is provided between the receiving surface (1.4) and an outer surface (1.7) through which a pressure medium can be brought from outside into the area between the receiving surface (1.4) and the lens (2) that can be received.

3. Block piece according to claim 2, **characterized in**
**that** various pressure medium channels (1.6) open out into the receiving surface (1.4) evenly spread.

4. Block piece according to any one of the preceding claims, **characterized in**
**that** the block piece (1) is a plastic injection moulded part.

5. Block piece according to any one of the preceding claims, **characterized in**
**that** the block piece (1) is at least a two-part piece.

## Revendications

1. Pièce de blocage (1) avec une lentille à usiner et constituée en tant que verre de lunettes (2), avec une partie d'accouplement (1.1) présentant un axe de rotation pour la réception dans un mandrin de pièce (3),
avec une partie de retenue (1.3) pour la fixation du verre de lunettes (2), la partie de retenue (1.3) présentant une surface de réception (1.4) pour la fixation d'un premier côté (2.1) du verre de lunettes (2) et la surface de réception (1.4) est réalisée en tant que surface négative sphérique avec orientation convexe ou concave et en se référant à la forme du premier côté (2.1) du verre de lunettes (2) à recevoir, et
avec une glu comme agent adhésif supplémentaire entre la surface de réception (1.4) de la partie de retenue (1.3) et le premier côté (2.1) du verre de lunettes (2), et la pièce de blocage (1) étant fabriquée à partir d'une matière plastique pouvant être usinée,
**caractérisée en ce**
**que** l'axe principal de la surface de réception (1.4) du pièce de blocage (1) est disposé de façon décalée et/ou basculée par rapport à l'axe de rotation de la partie d'accouplement (1.1),
**que** le premier côté (2.1) du verre de lunettes (2) porte contre la surface de réception (1.4) de la partie de retenue (1.3) et
**que** le agent adhésif ne serve pas d'un moyen d'espacement, mais remplit les fissures respectivement les rugosités existantes entre la surface de réception (1.4) et le premier côté (2.1).

2. Pièce de blocage selon la revendication 1, **caractérisée en ce**
**que** entre la surface de réception (1.4) et une surface extérieure (1.7), il est prévu au moins un canal d'agent de pression (1.6) par le biais duquel un agent de pression peut être appliqué depuis l'extérieur dans la zone entre la surface de réception (1.4) et la lentille (2) pouvant être reçu.

3. Pièce de blocage selon la revendication 2, **caractérisée en ce**
**que** plusieurs canaux d'agent de pression (1.6) découchent de façon régulièrement répartie sur la surface de réception (1.4).

4. Pièce de blocage selon l'une des revendications précédentes, **caractérisée en ce que** la pièce de blocage (1) est constituée en tant que pièce en matière plastique moulée par injection.

5. Pièce de blocage selon l'une des revendications précédentes, **caractérisée en ce que** la pièce de blocage (1) est constituée d'au moins deux parties.
